# EUROPEAN PATENT APPLICATION

(11) **EP 2 559 839 A2**
(43) Date of publication of application: **20.02.2013**
(21) Application number: 12005473.9
(22) Date of filing: 27.07.2012
(51) Int. Cl.: E06B 3/984, F16B 12/04

(54) **Process of applying adhesive to the joinery elements and a frame made of joinery elements**

(30) Priority: 08.08.2011 PL 39590211
(71) Applicant: FAKRO PP Sp. z o.o., 33-300 Nowy Sacz (PL)
(72) Inventor: Florek, Ryszard, 33-336 Labowa (PL)

(57) **Abstract**

A process of applying adhesive to the profiled ends (2) of the frame (5) elements (1) of the present invention comprises application of an adhesive both to the side surfaces (41) of the tenons (4) and the mortises (3) in the frame (1) element plane as well as the face surfaces (4) of the tenons (4), with the adhesive forming a protective coat, preventing moisture absorption by the profiled ends (2) of the frame (5) elements (1).

## Description

The present invention is a process of applying adhesive to the profiled ends of the joinery frame elements, preferably windows and doors, made of wood or woodgrain material, particularly tenon face surfaces also providing a protection of tenon surfaces against moisture. The present invention further discloses a frame made of elements with profiled ends with the adhesive applied in accordance with the disclosed process. The joinery elements form window frames, door frames, and similar structures.

**Prior art.** The processes of applying adhesive to bonded surfaces are well known and used in many fields of technology. In the process, the adhesive is usually automatically or manually applied to the bonded surfaces. The frame elements are usually longitudinally profiled. The disclosed profiling of the ends of the frame elements, applies to the areas intended for joining with the second element to form a frame, and is known as tenoning. The motrise and tenon joint includes a mortise and a tenon. By matching the shapes and dimensions of mortises and tenons in relation to each other and application of an adhesive, a durable, inseparable joint is made. The adhesive is usually applied to one of the bonded elements. In case of joinery elements the frame usually comprises 4 elements. The profiled ends of the frame elements are covered with an adhesive, on the tenon surfaces in the frame plane intended for joining with the mortises of the second element intended for bonding, and the face tendon surfaces are protected against moisture absorption using a known method, e.g. when used in rooms with high humidity. In case the products are used in rooms with high humidity, joinery made of PVC, wood covered with polyurethane, metal or similar materials are used.

A process of protecting face tenon surfaces with a protective layer, usually with a protective veneer is known from EP 1944990 B1. The invention discloses a process and the devices for protecting specific profiled surfaces of the end surfaces of the square-sawn timber with an external layer without any manual processes followed by the final stage. The process of applying a protective layer is carried out before bonding, and after the protective layer is applied it is left to dry, and the process of longitudinal profiling is carried out, the adhesive is applied and the elements are bonded to form a frame.

The solutions for protecting face tenon surfaces against moisture absorption require use of an additional process comprising use of a protective layer known as the initial wood preservation.

### Disclosure

**A process of applying adhesive** to the profiled ends of joinery elements comprising applying adhesive both on tenon surfaces in the plane of a frame made of the frame elements and intended for joining with mortises in the second element, as well as tenon face surfaces, protecting the profiled ends of the frame element s against moisture absorption. The adhesive is also a protective layer. A preferred version is to use the adhesive mixed with a wood preservative for improved protection of the profiled ends of the frame elements, particularly tenon face surfaces against moisture. It is a well known fact, that water penetrates better along the wood grain, than perpendicular to the grain, and the absorbability of the cross-section (along the grain) is higher compared to the absorbability of the radial section or tangential section. Increased wood moisture content causes warping and favours the fungi growth.

The invention discloses a process of applying adhesive with simultaneous protection of surfaces exposed to moisture absorption in the joinery tenons with the device installed in the automatic line or machine groups directly upstream of the joining process. The present invention further discloses a frame made of elements coated with the adhesive in a process of the present invention, which is characterized by a higher resistance to moisture and change in volume due to moisture content. The solution of the present invention ensures better resistance to moisture due to improved tenon protection.
Joints of glued elements are characterized by an improved protection against moisture. The interaction of tenons as a result of normal changes in wood volume due to moisture content causes the joint strength reduction and penetration of the frame elements. The solution according to the present invention provides an additional sealing of the sections absorbing the moisture and reduces the moisture penetration of the frame through the tenons.

In the first version of the process of applying adhesive to the frame elements, the adhesive is applied by spraying with a spray device, preferably a spray gun. The profiled ends of the frame elements are placed under the stream of the adhesive sprayed by the spray gun. It allows precise application of a suitable quantity of the adhesive to the profiled ends of the frame elements, whereas the adhesive also forms a protective coat. The frame elements are then bonded. Since the adhesive used in the process shall not reach the environment, a closed system with a filtering device is anticipated.

In the second version of the process of applying adhesive to the profiled ends of the frame elements, the adhesive is applied in a floatation cell with a spray gun. The profiled end of the element , the adhesive is applied to is placed in the floatation cell, where the jaws limit the application of the adhesive to other frame sections, and a spray gun or a spray nozzle is used to apply the adhesive to the ends of the frame element. When the element is removed from the floatation cell, the excess adhesive is blown off or sucked out of the element surface. The ends with the adhesive applied are bonded.

In the third version of the process of applying adhesive to the profiled ends of the frame elements, the adhesive is applied by immersion of the element end in the adhesive container, and the excess adhesive is blown off or sucked out of the element surface. An additional stage may be incorporated comprising draining the excess adhesive after blowing off. The ends with the adhesive applied are bonded.

In the fourth version of the process of applying adhesive to the profiled ends of the frame elements, the adhesive is applied manually with a brush on the tenon face surfaces. The excess adhesive is blown off or sucked out of the element surface. The ends with the adhesive applied are bonded.

**A frame made of profiled elements** of the present invention with the adhesive applied to the profiled ends of the frame elements in a process disclosed in the present invention. The elements are bonded to form the frame. The element ends are profiled crosswise to the element length, and the elements are joined at the corners. The profiling is known as tenoning and includes several spaced tenons and mortises. In the joining process, the tenons of the first element are positioned in the mortises of the second element. The frame elements are usually profiles made in a process of longitudinal wood machining. The adhesive is applied to the surfaces before joining.

In the embodiment of the frame made of profiled elements, the adhesive is applied to all profiled ends of the elements in a process of the present invention to protect all joined surfaces against moisture. The frame elements are then joined to form a frame.

For improved protection against moisture and extrinsic factors, the frame is preserved and varnished.

**The advantages** of the process of the present invention are the omission of preliminary wood preservation of the profiled ends of the frame elements, and the reduction of time required for the production of joinery elements. Also, as a result of process modification, other process arrangements are possible.

**Preferred embodiments of the invention.** The subject of the present invention is shown as the embodiments in the following drawings, where the following figures shows:

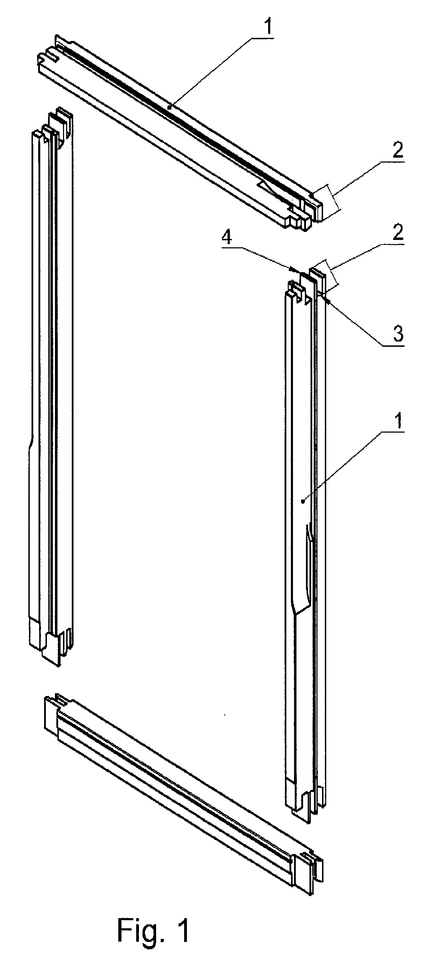

Fig. 1 - Frame elements with profiled ends before bonding.

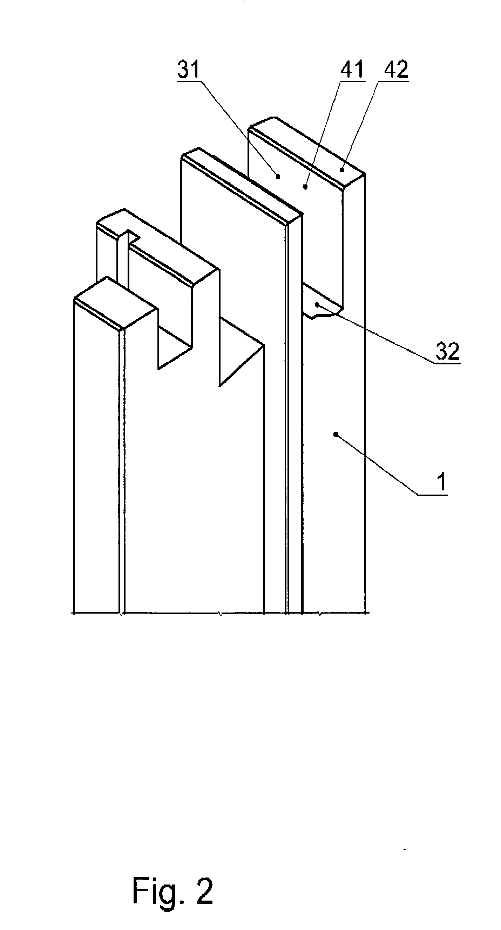

Fig. 2 - Profiled end of the frame element.

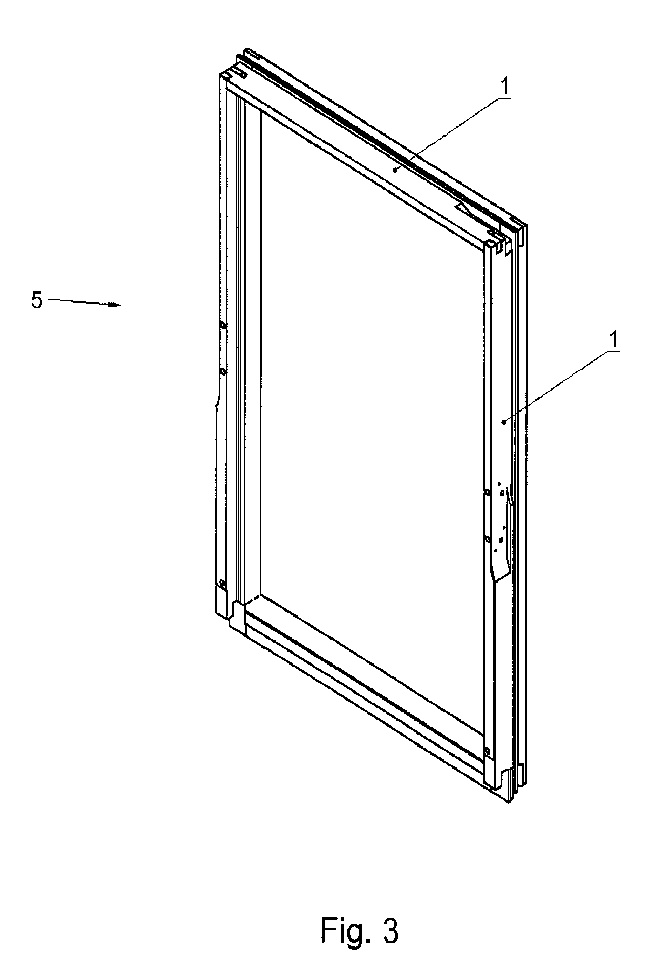

Fig. 3 - Frame made of elements with profiled ends.

The subject of the invention within the scope of the process of applying adhesive is shown in the embodiment detailed herein without reference to the drawings.

**Embodiment.** Due to a simplified presentation, a device for production of profiled frame elements and profiled ends of the frame elements is not shown. A profiled end (2) of an element (1) comprises tenons (4) and mortises (3). The elements (2) are joined to form a frame (5), a profiled end of the first element matching a profiled end of the second element. The tenons (4) on the end of the first element (1) match the mortises (3) of the second element. An adhesive is used to create a permanent bonding. A process of applying adhesive to the profiled ends (2) of the frame (5) elements (1) of the present invention comprises application of the adhesive both on the side (41) tenon (4) surfaces, which are in this case side (31) mortise (3) surfaces and end (32) mortise (2) surfaces in the frame (5) element (1) plane as well as face (42) tenon (4) surfaces, said adhesive also forming a protective coat, preventing moisture absorption by the profiled ends (2) of the frame (5) element (1). The process of the present invention comprises adhesive application to the profiled ends (2) of the elements (1) with a spray gun, by immersion or manually, and blowing off or sucking out the excess adhesive. The ends (2) of the elements (1) coated with the adhesive are bonded on a special bench, not described in the application, where all the joined elements form the frame (5).

## Claims

1. A process of applying adhesive to the profiled ends (2) of the elements (1) of a joinery frame (1) made of wood or woodgrain material **wherein** the adhesive is applied both to a tenon (4) and a mortise (3) surface in a plane of the frame (5) element (1), as well as the face (42) tenon (4) surface, also protecting the tenons against moisture absorption.

2. A process of applying adhesive to said profiled ends of said joinery frame of claim 1 **wherein** said adhesive is a glue.

3. A process of applying adhesive to said profiled ends of said joinery frame of claim 1 **wherein** said adhesive is a glue mixed with a wood preservative.

4. A process of applying adhesive to said profiled ends of said joinery frame of claim 1 **wherein** said adhesive is applied by spraying.

5. A process of applying adhesive to said profiled ends of said joinery frame of claim 4 **wherein** said adhesive is applied by floatation.

6. A process of applying adhesive to said profiled ends of said joinery frame of claims 4 or 5 **wherein** said adhesive is applied by at least a single spray gun.

7. A process of applying adhesive to said profiled ends of said joinery frame of claim 1 **wherein** said adhesive is applied by immersion of said profiled end (2) of said element (2) in said adhesive.

8. A process of applying adhesive to said profiled ends of said joinery frame of claim 1 **wherein** said adhesive is applied manually by brush.

9. A process of applying adhesive to said profiled ends of said joinery frame of claims 5, 7 or 8 **wherein** the excess adhesive is blown off or sucked out following the bonding.

10. A frame comprising said elements (1) **wherein** said adhesive is applied to all said elements (1) with profiled ends (2) according to the process as in any preceding claim.
